# EUROPÄISCHE PATENTANMELDUNG

(11) **EP 1 158 074 A1**
(43) Veröffentlichungstag der Anmeldung: **28.11.2001**
(21) Anmeldenummer: 00111135.0
(22) Anmeldetag: 24.05.2000
(51) Int. Cl.: C25D 1/00

(54) **Verfahren und Anlage zur Herstellung eines dreidimensionalen Bauteils aus Metall**

(71) Anmelder: CLAHO engineering GmbH, 82491 Grainau (DE)
(72) Erfinder: Hornig, Claus, 82467 Garmisch-Partenkirchen (DE)
(74) Vertreter: Flosdorff, Jürgen, Dr.

(57) **Zusammenfassung**

Das Verfahren zur Herstellung bevorzugt sehr kleiner dreidimensionaler Bauteile aus Metall sieht vor, daß das Bauteil aus einer Vielzahl galvanisch abgeschiedener Metallschichten jeweils vorbestimmter Dicke auf einem elektrisch leitenden Substrat aufgebaut wird, wobei jede Metallschicht durch eine Polymerschicht gleicher Dicke begrenzt wird. Die Schichtdicken liegen bevorzugt zwischen 1 m und 100 m. Das fertige Bauteil ist von einer Polymermatrix umschlossen, die anschließend entfernt wird. Das Bauteil läßt sich auch im Mikrobereich mit äußerster Präzision herstellen.

## Beschreibung

Die Erfindung betrifft ein Verfahren und eine Vorrichtung zur Herstellung metallischer dreidimensionaler Bauteile bzw. Strukturen sowohl im Mikrobereich, in dem die herzustellenden Strukturen kleiner 100 m sind, als auch in dem darüberliegenden sogenannten Makrobereich. Dabei wird das herzustellende Bauteil durch galvanische Prozesse aufgebaut, bei denen metallische lonen aus einem Elektrolyten auf elektrisch leitenden Flächen eines Substrats, auf dem das Bauteil aufgebaut wird, abgelagert werden.

Der vorliegenden Erfindung liegt die Aufgabe zugrunde, ein Verfahren anzugeben, mit dem vor allem sehr kleine metallische Bauteile nahezu beliebiger Form mit äußerster Präzision herstellbar sind. Außerdem soll eine Anlage zur Durchführung des Verfahrens angegeben werden.

Diese Aufgaben werden erfindungsgemäß durch die Merkmale der Patentansprüche 1 und 13 gelöst.

Vorteilhafte Ausgestaltungen der Erfindung sind in den Unteransprüchen gekennzeichnet.

Die Erfindung sieht vor, daß das Bauteil bzw. die Struktur aus einer Vielzahl galvanisch abgeschiedener Metallschichten jeweils vorbestimmter Dicke auf einem elektrisch leitenden Substrat aufgebaut wird, wobei jede Metallschicht durch eine Polymerschicht begrenzt wird. Dabei ist bevorzugt, daß alle Metallschichten dieselbe Dicke haben, obwohl auch unterschiedliche Schichtdicken möglich sind. Bevorzugt ist ferner, daß jede eine Metallschicht begrenzende Polymerschicht genauso dick wie die Metallschicht ist.

Bei dem erfindungsgemäßen Verfahren wird demnach die herzustellende dreidimensionale Struktur zuerst in einzelne Schichten unterteilt, deren Form durch dreidimensionale Daten, z.B. X-, Y- und Z-Koordinaten, festgelegt werden. Diese Schichten des herzustellenden Bauteils werden nach dem erfindungsgemäßen Verfahren aufeinander aufgebaut, so daß auf diese Weise das gewünschte dreidimensionale Bauteil entsteht.

Die Schichtdicken liegen dabei bevorzugt zwischen 1 m und 100 m, wobei aber auch kleinere und größere Schichtdicken möglich sind.

Die Kontur des Bauteils wird dabei durch eine Polymermaske begrenzt. Diese wird schichtweise durch Laserstrukturieren einer zuvor auf das Substrat bzw. auf das im Aufbau befindliche Bauteil aufgebrachten dünnen Polymerschicht erzeugt.

Dabei liegt es im Rahmen der Erfindung, daß auch Schichten aus anderen Materialien zur Begrenzung der galvanisch abgeschiedenen Schichten verwendet werden können, die sich durch Laser strukturieren lassen.

Das erfindungsgemäße Verfahren besteht hauptsächlich aus drei Schritten, die so lange wiederholt werden, bis das Bauteil fertig gestellt ist. In dem ersten Schritt wird auf ein elektrisch leitendes Substrat eine Polymerschicht aufgebracht, die eine vorbestimmte Dicke hat, die mit der herzustellenden ersten Metallschicht des Bauteils übereinstimmt.

Dabei kann das Polymer in Form einer Folie aufgeklebt werden, oder es kann eine Beschichtung mit einem pastösen oder flüssigen Polymer durch Rackeln, Spincoating, Dippen oder Sprühen erfolgen.

Wenn eine Folie verwendet wird, wird diese bevorzugt endlos von einer Rolle abgewickelt und mittels einer Vorrichtung auf dem Substrat abgelegt und dort unter Druck mit der darunterliegenden Schicht verbunden. Nach dem selektiven Abtragen bzw. Heraustrennen des Bereichs, in dem die Metallschicht abgeschieden werden soll, wird die Endlosfolie weiter transportiert und auf eine zweite Rolle aufgewickelt.

Nach dem Aushärten oder Abtrocknen der Polymerlösung bzw. des Klebers der Folie wird mittels eines Lasers das Polymer definiert an dem Bereich abgetragen oder chemisch verändert, auf dem nachfolgend die zugehörige Schicht des Bauteils galvanisch aufgebaut wird. Der Laser überstreicht dabei die Bereiche, die für die jeweilige Schicht zuvor durch X- und Y-Koordinaten festgelegt wurden. Hierbei kann entweder der Laserstrahl mittels eines Scannerspiegels die zu belichtende Struktur überstreichen, oder das elektrisch leitende Substrat mit den bereits erzeugten Metallschichten, der diese umschließenden Polymermaske und der neu aufgebrachten Polymerschicht wird unter einer feststehenden Laseroptik durch entsprechende Linearantriebe in der Ebene verfahren. Möglich ist auch ein Verfahren der Laseroptik gegenüber dem feststehenden Bauteil mittels Linearaktoren.

In allen genannten Fällen müssen die Laserquelle bzw. die Aktoren durch eine entsprechend geeignete Steuerungssoftware angesteuert werden, um die Strukturierung mit der notwendigen Präzision zu erzeugen.

Die Laserquelle und das verwendete Polymer bilden ein abgestimmtes System, um eine vollständige Ablation des Polymers durch den Laser zu gewährleisten. Ausschlaggebend sind hier die Wellenlänge, die die Laserquelle aussendet, und die von dem Polymer entsprechend absorbiert werden muß, sowie die Betriebsart des Lasers (d.h. Pulsung, Pulsgröße, Leistung etc.).

In dem dritten Schritt erfolgt der Aufbauvorgang des Bauteils. Hierzu wird das Substrat (das zuerst nur aus einer elektrisch leitenden Grundplatte mit der darauf angeordneten ersten strukturierten Polymerschicht besteht) einer Anode (z.B. Nickelpellets) gegenüberliegend in einen Elektrolyten getaucht. Es wird eine Spannung an die Anode bzw. an das Substrat (Kathode) angelegt, um so metallische lonen auf der nicht von der Polymerschicht abgedeckten Substratoberfläche abzuscheiden. Dies geschieht bevorzugt so lange, bis die durch das Lasern erzeugten negativen Strukturen aufgefüllt sind. Die Metallabscheidung wird über den Stromfluß bezogen auf die Fläche der galvanischen Schichtkontur geregelt. Durch Pulsung bzw. Umpolung kann der galvanische Vorgang zusätzlich beeinflußt werden.

Zwischen den vorstehend beschrieben hauptsächlichen Schritten des erfindungsgemäßen Verfahrens kann vorgesehen sein, daß die Substratoberfläche gereinigt wird, bzw. daß Rückstände auf- und abgelöst werden, die durch das Lasern bzw. durch den galvanischen Prozeß entstanden sind. Dies kann auf elektrochemischem Wege, durch Ultraschallbehandlung, durch erneutes Bearbeiten der freigelegten Struktur mittels eines zweiten bzw. modifizierten gepulsten Laserstrahls oder durch naßchemisches Lösen erfolgen.

Auch ein zusätzlicher Schritt zur Planbearbeitung der Polymerschicht bzw. Lackschicht kann als weiterer Zwischenschritt nach dem Galvanisieren durchgeführt werden. Diese Bearbeitung kann durch elektrochemisches Polieren, durch Planfräsen oder Drehen oder durch spezielle Verfahren (die in der Si-Wafer-Technologie bekannt sind, wie z.B. Flycutting etc.) erfolgen.

Nach Abschluß dieses die erste Schicht erzeugenden Vorganges wird die nächste Polymerschicht auf die erste Polymerschicht und die erste Metallschicht aufgetragen, wobei sich der vorstehende Arbeitszyklus wiederholt, bis das Bauteil komplett aufgebaut ist und in einer Polymermatrix eingebettet vorliegt. Dabei werden die einzelnen metallischen Schichten jeweils auf der darunterliegenden Metallschicht abgeschieden.

Die erfindungsgemäße Anlage zur Herstellung dreidimensionaler Bauteile aus Metall enthält als hauptsächliche Komponenten eine Beschichtungsvorrichtung zum Auftragen bzw. Aufkleben von Polymerschichten auf ein Substrat, eine Lasereinrichtung zum selektiven Abtragen der Polymerschichten in vorbestimmten Bereichen des Subtrats und eine Galvanikeinrichtung zum metallischen Beschichten der jeweils freigelegten elektrisch leitenden Bereiche des Substrats. Daneben enthält die Anlage weitere Komponenten wie Werkstückträger, ein Positioniersystem, eine Beschichtungsvorrichtung mit Aushärteinheit mit einem Reinraum, eine Prozesskammer, in der die Laserablation stattfindet, ferner bevorzugt eine Reinigungsstation sowie eine Station zur mechanischen Planbearbeitung sowie eine Steuer- und Regeleinheit und optische Meßeinrichtungen. Außerdem ist ein mechatronisches System zur Verkettung der Stationen (Drehtisch, Handlingsystem, Lineartische etc.) vorgesehen.

Diese Komponenten sind bevorzugt in einer Maschine untergebracht und über ein Bedienerpult zu bedienen. Der Gesamtprozeß läuft bevorzugt automatisch ab.

Die Erfindung gibt demnach ein Verfahren und eine Anlage zur Herstellung insbesondere sehr kleiner dreidimensionaler Bauteile aus Metall an, deren vorgesehene Form mit äußerster Präzision realisierbar ist.

Weitere Einzelheiten der Erfindung ergeben sich aus der nachfolgenden Beschreibung sowie anhand der Zeichnung. Dabei zeigen auf schematische Weise:
- Figur 1a/b: den ersten Verfahrensschritt;
- Figur 2: den zweiten Verfahrensschritt;
- Figur 3: den dritten Verfahrensschritt;
- Figur 4: den vierten Verfahrensschritt;
- Figur 5: den fünften Verfahrensschritt;
- Figur 6: den ersten Verfahrensschritt des zweiten Arbeitszyklus;
- Figur 7: den Zustand nach dem letzen Verfahrensschritt und
- Figur 8: das fertige Bauteil nach Entfernen der Polymermatrix.

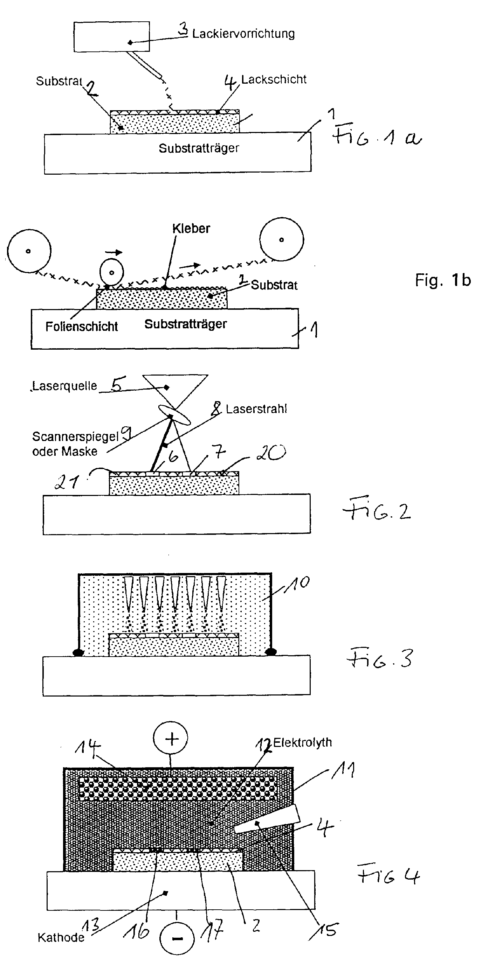

Die Figuren 1a und 1b zeigen den ersten Verfahrensschritt des ersten Arbeitszyklus. Auf einem Substratträger 1 ist ein Substrat 2 in Form einer Platte aus einem elektrisch leitenden Material angeordnet. Die Oberseite des Substrats 2 wird von einer Lackiervorrichtung 3 mit einer Lackschicht aus einem Polymer versehen, das beispielsweise in flüssiger Form auf das Substrat aufgesprüht oder gemäß Figur 1b als Folienschicht aufgeklebt wird. Weitere geeignete Aufbringungsverfahren sind Spincoating, Rackeln, Dippen etc., wobei bevorzugte Schichtdicken zwischen etwa 0,001 mm und 0,100 mm liegen. Anschließend härtet die Polymerschicht aus bzw. sie trocknet ab.

Figur 2 zeigt den zweiten Arbeitsschritt der Laserablation. Mittels einer Laserquelle 5 wird die Polymerschicht 4 an Bereichen 6, 7 selektiv abgetragen, wodurch die Polymerschicht entsprechend der herzustellenden Metallschicht, welche durch CAD-Daten beschrieben ist, strukturiert wird. Hierbei werden die Bereiche 6 und 7 der jeweiligen Bauteilschicht von dem Laserstrahl 8 überstrichen, der in der dargestellten Ausführungsform dabei über einen Scannerspiegel 9 abgelenkt wird. Das Polymer wird dabei in den Bereichen 6 und 7 zerstört und verdampft. Gegebenenfalls wird der Prozeßraum, in dem die Laserablation stattfindet, mit einem Prozeßgas wie Sauerstoff, Argon, Stickstoff etc. gespült oder es wird ein Vakuum in der Kammer erzeugt.

In einer alternativen Vorgehensweise kann die Austrittsoptik des Lasers oder das Werkstück mittels geeigneter Aktoren in X- und Y-Richtung bewegt werden.

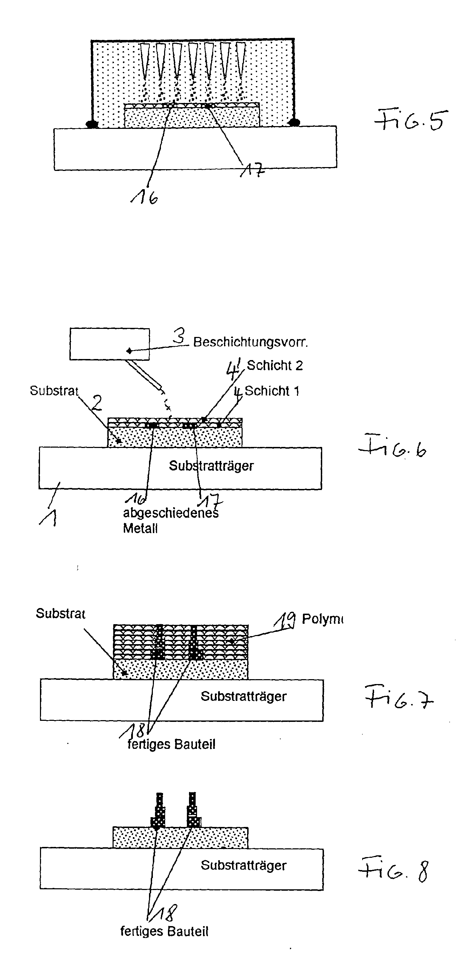

Figur 3 zeigt eine Reinigungsstation 10, in der die durch das Lasern entstandenen Rückstände entfernt werden.

In der Galvanikstation 11 wird das Substrat 2 mit der strukturierten Polymerschicht 4 in einen Elektrolyten 12 eingetaucht. Der Substratträger 1 bildet mit dem Substrat 2 die Kathode 13, die gegenüber einer beispielsweise aus Nickelpellets bestehenden Anode 14 angeordnet ist, deren dem Substrat zugewandten Fläche größer ist als die Fläche des Substrats 2.

Mit dem Bezugszeichen 15 ist ein Anströmrohr in Figur 4 bezeichnet, welches den Elektrolyten gezielt an die Oberfläche des Bauteiles leitet, um einen guten lonentransport zu gewährleisten.

Die freigelegten elektrisch leitenden Bereiche 6, 7 werden in der Galvanikstation 11 mit Metall beschichtet. Es wird bevorzugt soviel Metall abgeschieden, bis die ausgeschnittenen bzw. negativen Bereiche aufgefüllt sind. Dabei können annähernd alle Metalle und deren Legierungen abgeschieden werden. Die Metallabscheidung wird über den Stromfluß gesteuert.

Als Elektrolyt kommen bevorzugt leicht alkalische Nickel-Eisen-Systeme zum Einsatz, es können jedoch auch andere Elektrolythen verwendet werden. Anschließend werden in dem fünften Schritt gemäß Figur 5 die Rückstände aus dem galvanischen Prozeß entfernt und die Substratoberfläche wird getrocknet.

Anschließend wiederholt sich der vorstehende Arbeitszyklus. Gemäß Figur 6 wird eine zweite Lackschicht bzw. Polymerschicht 4 auf die erste Polymerschicht 4 und die abschiedenen Metallschichten 16, 17 (in den Bereichen 6, 7) von der Lackiervorrichtung bzw. Beschichtungsvorrichtung 3 aufgebracht.

Nach mehrmaliger Wiederholung der Arbeitszyklen ist gemäß Figur 7 das fertige Bauteil 18 hergestellt, das aus mehreren aufeinander abgelagerten Metallschichten 16, 17 besteht. Das fertige Bauteil 18 ist in dem in Figur 7 dargestellten Zustand von einer Polymermaske 19 allseitig umschlossen. Wenn die Polymermatrix 19 entfernt ist, liegen die beiden fertigen Bauteile 18 auf dem Substrat 2 frei und werden von dem Substrat entfernt.

Mit den Bezugszeichen 20 und 21 sind Bereiche bezeichnet, in denen die Polymerschicht von der Lasereinrichtung vernetzt werden kann.

## Patentansprüche

1. Verfahren zur Herstellung eines dreidimensionalen Bauteils aus Metall,
**dadurch gekennzeichnet,**
**daß** das Bauteil aus einer Vielzahl aufeinander galvanisch abgeschiedener Metallschichten jeweils vorbestimmter Dicke auf einem elektrisch leitenden Substrat aufgebaut wird, wobei jede Metallschicht durch eine zuvor aufgebrachte Polymerschicht begrenzt wird.

2. Verfahren nach Anspruch 1,
**gekennzeichnet durch**
folgende Schritte:
(a) eine erste Polymerschicht wird auf ein elektrisch leitendes Substrat aufgebracht;
(b) die erste Polymerschicht wird mittels eines Lasers strukturiert, in dem die Polymerschicht in einem ersten Bereich bzw. in ersten Bereichen entfernt wird;
(c) das Substrat wird mit der ersten strukturierten Polymerschicht in einen Elektrolyten getaucht, wo nach Anlegen einer elektrischen Spannung Metallionen in dem/den von Polymer befreiten Bereich/-Bereichen abgeschieden werden, bis der Bereich/die Bereiche mit der ersten Metallschicht aufgefüllt ist/sind,
anschließend wird die zweite Polymerschicht aufgebracht und die vorstehenden Schritte werden so lange wiederholt, bis das Bauteil fertiggestellt ist.

3. Verfahren nach Anspruch 1 oder 2,
**dadurch gekennzeichnet,**
**daß** die Polymerschicht durch Aufkleben einer Folie aufgebracht wird.

4. Verfahren nach Anspruch 1 oder 2,
**dadurch gekennzeichnet,**
**daß** die Polymerschicht in pastöser Form aufgetragen wird.

5. Verfahren nach einem der Ansprüche 1 oder 2,
**dadurch gekennzeichnet,**
**daß** die Polymerschicht in flüssiger Form aufgetragen wird.

6. Verfahren nach einem der Ansprüche 1 bis 5,
**dadurch gekennzeichnet,**
**daß** die Polymerschicht aushärtet bzw. abtrocknet, bevor sie von dem Laser selektiv abgetragen wird.

7. Verfahren nach einem der Ansprüche 1 bis 6,
**dadurch gekennzeichnet,**
**daß** der Laser den Bereich der jeweils auszubildenden Metallschicht überstreicht und das Polymer dabei zerstört und verdampft.

8. Verfahren nach einem der Ansprüche 1 bis 6,
**dadurch gekennzeichnet,**
**daß** der Laser den Bereich der jeweils auszubildenden Schicht überstreicht und das Polymer physikalisch-chemisch verändert, welches in einem späteren Schritt entfernt wird.

9. Verfahren nach Anspruch 8,
**dadurch gekennzeichnet,**
**daß** das physikalisch-chemisch veränderte Polymer durch Ätzen, bzw. mittels anderer Löseverfahren entfernt wird.

10. Verfahren nach einem der Ansprüche 1 bis 9,
**dadurch gekennzeichnet,**
**daß** die abgeschiedene Metallschicht dieselbe Dicke hat wie die zugehörige Polymerschicht.

11. Verfahren nach eiinem der Ansprüche 1 bis 5,
**dadurch gekennzeichnet,**
**daß** die durch den Laser überstrichenen Bereiche (20, 21) chemisch vernetzt werden und somit eine polymerisierte Schicht entsteht.

12. Verfahren nach Anspruch 11,
**dadurch gekennzeichnet,**
**daß** von den nicht vom Laser überstrichenen Bereichen (6, 7) durch ein geeignetes Verfahren (ätzen, naßchemisch lösen) die nicht polymerisierte Schicht entfernt wird und so die gewünschte Negativstruktur erzeugt wird.

13. Anlage zur Herstellung eines dreidimensionalen Bauteils aus Metall,
**gekennzeichnet durch**,
eine Beschichtungsvorrichtung (3) zum Auftragen bzw. Aufkleben von Polymerschichten (4) auf ein Substrat (2),
eine Lasereinrichtung (5) zum selektiven Abtragen der Polymerschichten (4) in vorbestimmten Bereichen (6, 7),
und eine Galvanikeinrichtung (11) zum metallischen Beschichten der jeweils freigelegten elektrisch leitenden Bereiche (6, 7).

14. Anlage nach Anspruch 13,
**gekennzeichnet durch**
eine Reinigungsstation (10), in der die Oberfläche der Polymerschicht (4) und der Metallschicht (16, 17) gereinigt wird.

15. Anlage nach Anspruch 13 oder 14,
**gekennzeichnet durch**
eine Planbearbeitungsstation, in welcher die Oberfläche zyklisch planarisiert wird, um Unebenheiten auszugleichen.

16. Anlage nach einem der Ansprüche 13 bis 15,
**gekennzeichnet durch**
eine Beschichtungsvorrichtung (3) zum Auftragen von Polymerschichten (4) auf ein Substrat (2), eine Lasereinrichtung (5) zum selektiven Vernetzen der Polymerschichten in den vorbestimmten Bereichen (20, 21) und eine Galvanikvorrichtung.
